# EUROPÄISCHE PATENTSCHRIFT

(11) **EP 1 089 408 B1**
(45) Veröffentlichungstag und Bekanntmachung des Hinweises auf die Patenterteilung: **30.01.2008**
(21) Anmeldenummer: 00250329.0
(22) Anmeldetag: 29.09.2000
(51) Int. Cl.: H02B 1/36, H02B 11/173

(54) **Geräteeinschub mit einer Grundplatte und einem relativ dazu verschiebbaren Geräteträger**
Component drawer with a base plate and a component support sliding relatively to this base plate
Tiroir d'appareillage comportant une platine de base et un support d'appareillage coulissant sur cette platine

(30) Priorität: 30.09.1999 DE 19948697
(43) Veröffentlichungstag der Anmeldung: 04.04.2001
(73) Patentinhaber: SIEMENS AKTIENGESELLSCHAFT, 80333 München (DE)
(72) Erfinder: Schmidt, Mario, 04430 Leipzig (DE)

(56) Entgegenhaltungen:
- DE-A- 19 748 553

## Beschreibung

Die Erfindung betrifft einen Geräteeinschub für ein elektrisches Schaltfeld mit folgenden Merkmalen:
- ein rahmenartiger Geräteträger mit Trennkontakten für die Energiezuleitung zu den Geräten,
- eine Grundplatte und Führungsmittel zur gegenseitigen Führung der Grundplatte und des Geräteträgers in Einschubrichtung,
- eine Rasteinrichtung zur lösbaren Befestigung der Grundplatte im Schaltfeld und ein frontseitig am Geräteeinschub zugängliches Bedienelement für die Rasteinrichtung,
- eine Gewindespindel sowie ein die Gewindespindel aufnehmendes Mutterstück zur Verschiebung des Geräteträgers relativ zu der Grundplatte in eine Betriebsstellung und in eine Trennstellung.

Ein Geräteeinschub dieser Art ist durch die DE 1 765 300 B1 bekannt geworden. Die Rasteinrichtung wird dabei durch einen Rasthebel gebildet, der sich von der Frontseite des Geräteeinschubes bis zu seiner Rückseite erstreckt und dort mit einem ortsfesten Widerlager zusammenwirkt, das auch das Mutterstück für die Gewindespindel trägt. Beide für die Benutzung des Geräteeinschubes wesentlichen Bauteile, nämlich die Gewindespindel und die Rasteinrichtung, durchsetzen somit den Geräteeinschub in seiner ganzen Tiefe. Dies beansprucht einen gewissen Raum.

Der Erfindung liegt die Aufgabe zugrunde, die Raumnutzung des Geräteeinschubes ohne Verlust an Funktionalität zu erhöhen.

Diese Aufgabe wird gemäß der Erfindung durch folgende weitere Merkmale gelöst:
- die Gewindespindel ist zwischen den Frontseiten des Geräteträgers und der Grundplatte angeordnet und entsprechend der relativen Verschiebung von Grundplatte und Geräteträger bemessen, und
- die Rasteinrichtung umfasst zwei an gegenüberliegenden Seitenkanten der Grundplatte angeordnete Rasthaken.
Durch die Erfindung wird erreicht, dass die Gewindespindel kurz ist und daher den Innenraum des Einschubes nicht durchsetzt. Gleichfalls geht kein wertvoller Innenraum des Geräteeinschubes für die Rasteinrichtung verloren, weil Rasthaken in symmetrischer Anordnung nur Randzonen des Geräteeinschubes beanspruchen. Zugleich ist die Sicherheit gegen Verkantung und unbeabsichtigte Freigabe durch die symmetrische Anordnung von zwei seitlichen Rasthaken gegenüber der bekannten Anordnung verbessert.

Ferner ermöglicht es die seitliche Anordnung der Rasthaken, mit einfachen Mitteln für eine Sperre gegen eine gefahrbringende Fehlbedienung zu sorgen. Dies kann gemäß einer Ausgestaltung der Erfindung dadurch geschehen, dass an dem Geräteträger mit den an der Grundplatte befindlichen Rasthaken zusammenwirkende Sperrorgane derart angeordnet sind, dass eine der Verrastung der Grundplatte im Schaltfeld vorausgehende Schwenkung der Rasthaken nur in einer der Trennstellung des Geräteeinschubes entsprechenden relativen Stellung des Geräteträgers und der Grundplatte erfolgen kann.

Geräteeinschübe können in bekannter Weise mit Hilfstrennkontakten versehen werden. Diese ermöglichen eine Fernsteuerung und Prüfung der auf dem Geräteeinschub befindlichen Schaltgeräte. Hilfstrennkontakte dieser Art können sowohl direkt-manuell betätigbar sein als auch durch mechanische Hilfsantriebe. Während die erstgenannte Betriebsweise für den Benutzer zwar relativ unbequem, jedoch mechanisch sehr einfach und betriebssicher ist, wird bei der zweiten Bauweise eine für den Benutzer sehr bequeme Handhabung durch einen nicht unbeträchtlichen konstruktiven Aufwand erkauft. Im Rahmen der Erfindung lassen sich die Vorteile beider Bauweisen weitgehend dadurch kombinieren, dass an der Rückseite des Geräteträgers ein Hilfstrennkontaktblock in Einschubrichtung verschiebbar angeordnet ist und dass zur Betätigung des Hilfstrennkontaktblockes in Richtung eines im Schaltfeld ortsfest angeordneten Gegenstückes des Hilfstrennkontaktblockes ein frontseitig am Geräteträger bedienbarer Schieber vorgesehen ist. In diesem Zusammenhang ist es vorteilhaft, wenn der Schieber nahe einer Seitenwand des Geräteträgers und parallel zu dieser angeordnet ist.

Zur Sicherheit des Benutzers und der Schaltanlage besteht die Forderung, dass eine versehentliche Vornahme gefahrbringender Handlungen verhindert werden muss. Nach einer Weiterbildung der Erfindung wird ein wesentlicher Gesichtspunkt dieser Forderung dadurch erfüllt, dass eine frontseitig am Geräteträger angeordnete Zugangsöffnung zu einem Kopfstück der Gewindespindel durch einen in seine Verschlussstellung vorgespannten und von Hand bedienbaren und quer zur Einschubrichtung am Geräteträger bewegbar geführten Verriegelungsschieber verschließbar ist, der seinerseits in Abhängigkeit von der Schaltstellung eines auf dem Geräteträger montierten Hauptschalters blockierbar bzw. freigebbar ist. Hiermit wird auf einfache Weise auch die richtige Bedienung des Schiebers für den Hilfstrennkontaktblock sichergestellt, in dem nach einer weiteren Ausgestaltung der Erfindung der Schieber für den Hilfstrennkontaktblock einen Kulissenstift trägt, der mit einer am Verriegelungsschieber angeordneten ersten Kulisse zusammenwirkt, die einen in Einschubrichtung verlaufend angeordneten Kulissenabschnitt und einen von dem vorderen Ende dieses Kulissenabschnittes ausgehend und quer zur Einschubrichtung angeordneten Kulissenabschnitt aufweist, wobei der in Einschubrichtung angeordnete Kulissenabschnitt eine Betätigung des Schiebers des Hilfstrenntontaktblockes nur in der Sperrstellung des Verriegelungsschiebers gestattet.

Der gleiche Verriegelungsschieber kann nach einer weiteren Ausgestaltung der Erfindung eine zweite Kulisse mit einem in Einschubrichtung verlaufend angeordneten Kulissenabschnitt sowie von den Enden dieses Kulissenabschnittes ausgehende und quer zur Einschubrichtung verlaufend angeordnete Kulissenabschnitte aufweisen, wobei an der Grundplatte ein mit der zweiten Kulisse zusammenwirkender Kulissenstift angeordnet ist, die Länge des in Einschubrichtung verlaufenden Kulissenabschnittes dem Weg des Geräteträgers zwischen der Trennstellung und der Betriebsstellung entspricht und aufgrund dieser Anordnung der Hauptschalter außerhalb der Endstellungen des Geräteträgers gegen Einschalten gesperrt ist.

Bei der Anordnung nach der Erfindung wirkt die von der Gewindespindel ausgeübte Einfahrkraft auf die Grundplatte, die sich ihrerseits über die erwähnten Rasthaken im Schaltfeld abstützt. Für diese Funktionen ist ein präziser Sitz der Grundplatte im Schaltfeld wesentlich. Nach einer Ausgestaltung der Erfindung kann hierzu durch eine an der Grundplatte rückseitig angebrachten und sich in Einschubrichtung erstreckenden Führungszunge beigetragen werden, die mit einer im Schaltfeld angeordneten Aufnahmeöffnung zusammenwirkt.

Bei dem eingangs erläuterten bekannten Geräteeinschub ist eine mit Bedienelementen bestückte Frontblende an der Grundplatte angebracht. Dies hat zur Folge, dass die Position der Frontblende unabhängig von der Stellung des Geräteeinschubes im Schaltfeld ist. Andererseits tritt bei jeder Betätigung des Geräteträgers eine Relativbewegung auf, welche Verbindungsleitungen beansprucht. Eine Ausgestaltung der Erfindung sieht in diesem Zusammenhang vor, dass die Frontblende lösbar am Geräteträger angebracht ist. Dabei entfallen die Relativbewegungen.

Die Erfindung wird im folgenden anhand eines in den Figuren dargestellten Ausführungsbeispieles näher erläutert.

Die Figur 1 zeigt einen Geräteeinschub in der Draufsicht.

Die Figur 2 zeigt den Geräteeinschub nach Figur 1 von vorn.

In der Figur 3 ist eine Grundplatte des Geräteeinschubes nach der Figur 1 gesondert perspektivisch dargestellt.

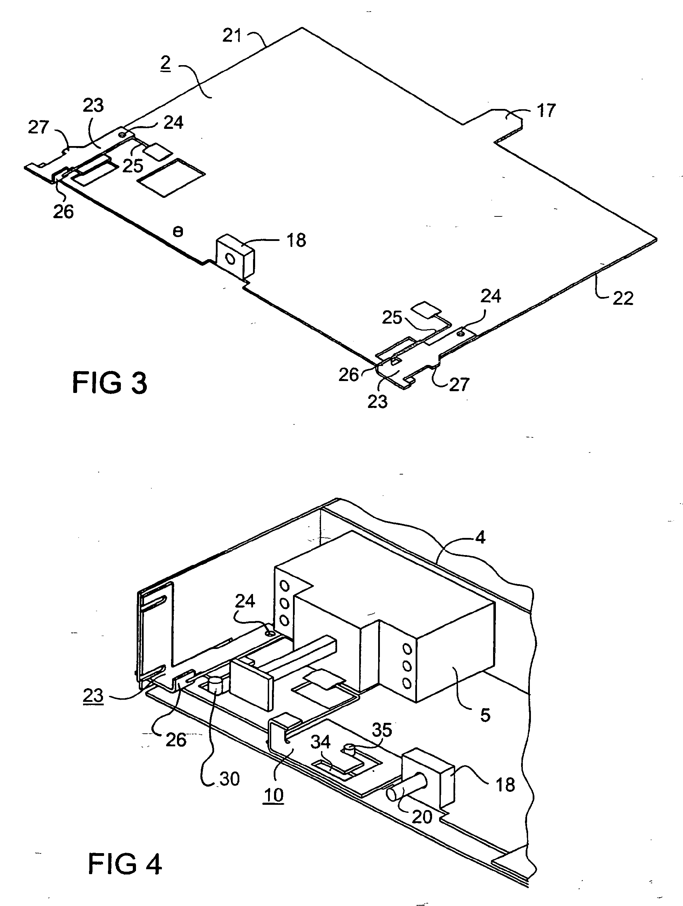

Einzelheiten eines Verriegelungsschiebers zeigt die Figur 4 in perspektivischer Darstellung.

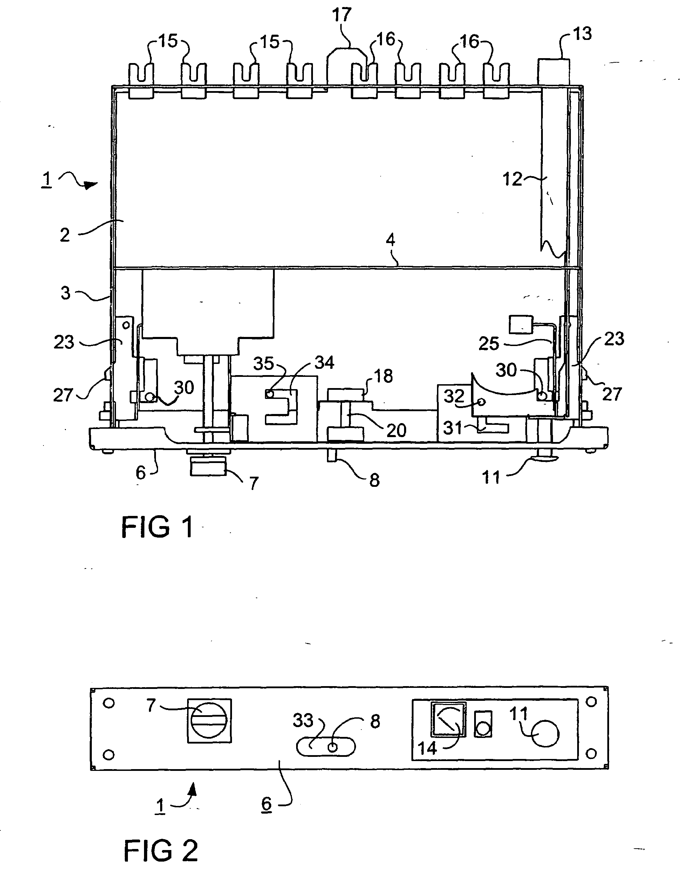

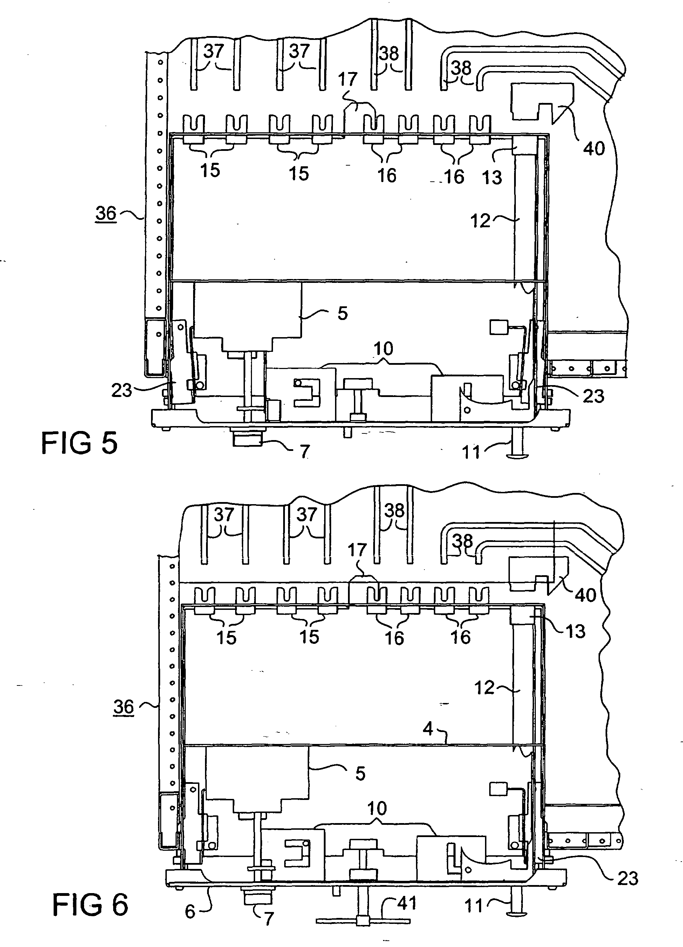

Die Figuren 5, 6, 7 und 8 zeigen den Geräteeinschub gemäß den Figuren 1 bis 4 in vereinfachter Gestalt mit angrenzenden Teilen eines Schaltfeldes beim Einsetzen in das Schaltfeld sowie in der Trennstellung, der Teststellung und in der Betriebsstellung.

Der in den Figuren 1 und 2 gezeigte Geräteeinschub 1 weist eine Grundplatte 2 und einen relativ dazu verschiebbaren Geräteträger 2 auf. Dieser ist rahmenartig gestaltet und kann durch weitere Wände zu einem geschlossenen Gehäuse vervollständigt sein. Im inneren ist der Geräteträger mit einer vertikalen Tragwand 4 versehen, die in dem gezeigten Beispiel mit einem Hauptschalter 5 bestückt ist. Weitere Geräte wie Schütze, Überlastschutzgeräte, Schmelzsicherungen, Kommunikationsgeräte und sonstige Ausrüstungen sind nicht dargestellt, können jedoch an der Tragwand 4 neben dem Hauptschalter und/oder zusätzlich an der Rückseite der Tragwand befestigt werden. Frontseitig ist der Geräteträger durch eine Frontblende 6 abgeschlossen, an der als wesentliche Bedienelemente ein Drehgriff 7 zur Betätigung des Hauptschalters 5, ein Griffstück 8 eines Verriegelungsschiebers 10 und eine Drucktaste 11 zur Betätigung eines Schiebers 12 eines Hilfstrennkontaktblockes 13 zugänglich sind. Ferner ist als Beispiel für weitere Funktionen der Frontblende 6 ein Anzeigeinstrument 14 gezeigt.

Der Geräteeinschub 1 weist an der Rückseite des Geräteträgers 3 angebrachte Trennkontakte 15 für die Energiezufuhr und Trennkontakte 16 für den Anschluss eines Verbrauchers auf. Von weiteren Erläuterungen wird in diesem Zusammenhang abgesehen, da Wirkungsweise und Schaltung und Betätigung von Trennkontakten allgemein bekannt sind. Gleiches gilt für den Hilfstrennkontaktblock 13.

Für die Benutzung des Geräteeinschubes 1 in einem Schaltfeld (z. B. Einschubfach in einer Niederspannungs-Schaltanlage oder einem Schaltschrank) ist eine Rasteinrichtung wesentlich, die an der Grundplatte 2 angebracht ist. Diese ist zur Verdeutlichung von Einzelheiten gesondert in der Figur 3 dargestellt. Wie man erkennt, ist die Grundplatte 2 im wesentlichen eben und weist rückseitig etwa in der Mitte eine sich in der Einschubrichtung erstreckende Führungszunge 17 und vorn, gleichfalls etwa mittig, ein Mutterstück 18 für eine in der Figur 1 gezeigte Gewindespindel 20 auf. Das vordere Ende der Gewindespindel ist mittels eines Druckstückes an der Frontblende 6 abgestützt. An den gegenüberliegenden Seitenkanten 21 und 22 der Grundplatte 2 befinden sich Rasthaken 23, die in der Ebene der Grundplatte 2 an Drehzapfen 24 schwenkbar gelagert sind. Federn 25 spannen die Rasthaken nach außen vor. Griffstücke 26 an den Rasthaken 23 gestatten eine Schwenkung der Rasthaken von Hand, um Rastnasen 27 in oder außer Eingriff mit Öffnungen im nicht gezeigten Schaltfeldgerüst zu bringen. Zur Erleichterung des Einsetzens des Geräteeinschubes in das Schaltfeld weisen die Rastnasen 27 Einfahrschrägen auf. Gleichfalls sind die rückwärtigen Kanten der Führungszunge 17 abgeschrägt, um das Eingreifen in eine Aufnahmeöffnung im Schaltfeldgerüst zu erleichtern.

Wie dies an sich bekannt ist, kann das Mutterstück im Fahrantrieb des Geräteeinschubes 1 auch an der Frontblende 6 angebracht sein. Dementsprechend befindet sich dann das Druckstück oder Widerlager der Gewindespindel 20 nicht an der Frontblende 6, sondern an der Grundplatte.

Zur gefahrlosen Benutzung des Geräteeinschubes 1 sind eine Reihe von Sicherheitsfunktionen vorgesehen. Insbesondere kann der Geräteeinschub nur in einer Grundstellung in das Schaltfeld eingesetzt werden, die der Trennstellung entspricht. Hierzu sind am Geräteträger Sperrbolzen derart angebracht, dass eine zum Einrasten erforderliche Schwenkung der Rasthaken 23 blockiert ist, wenn die Grundplatte 2 und der Geräteträger 3 eine der Betriebsstellung entsprechende relative Position einnehmen. Hierdurch ist sichergestellt, dass sich der Geräteeinschub 1 nach dem Einsetzen in das Schaltfeld in seiner Trennstellung befindet.

Zur Inbetriebnahme des Geräteeinschubes 1 betätigt der Benutzer zunächst die Drucktaste 11 und bringt hierdurch den Hilfstrennkontaktblock 13 in Eingriff mit einem im Schaltfeld ortsfest montierten Gegenstück. In dieser Teststellung ist die Geräteausrüstung des Geräteeinschubes 1 mit Hilfsenergie zur probeweisen Betätigung der Schaltgeräte versorgt.

Der frontseitig parallel zur Frontblende 6 verschiebbar geführte Verriegelungsschieber 10 ist mit einer ersten Kulisse 31 versehen (Figur 1), in die ein mit dem Schieber 12 bewegbarer Steuerstift 32 eingreift. Hierdurch wird erreicht, dass der Verriegelungsschieber zur Freigabe des Zuganges zu der Gewindespindel 20 nur in der Trennstellung betätigt werden kann. Bevor der Benutzer den Geräteeinschub 1 in seine Betriebsstellung bringt, muss er somit die Teststellung durch Ziehen an der Drucktaste 11 wieder aufheben.

Als weitere Sicherheitsfunktion besteht zwischen dem Verriegelungsschieber 10 und dem Hauptschalter 5 eine Abhängigkeit derart, dass der Verriegelungsschieber 10 nur in der Ausschaltstellung des Hauptschalters 5 verschoben und hierdurch der Zugang zur Gewindespindel 20 in einem Fenster 33 der Frontblende 6 ermöglicht wird. Gleichfalls wird eine vorzeitige Betätigung des Hauptschalters 5, d. h. dessen Einschalten in einer Zwischenstellung des Geräteträgers zwischen der Trenn- und der Betriebsstellung, durch eine zweite Kulisse 34 im Verriegelungsschieber 10 verhindert, die mit einem an der Grundplatte 2 angebrachten Steuerstift 35 zusammenwirkt. Als weitere Voraussetzung für das Einschalten des Hauptschalters 5 muss der Benutzer das zur Bedienung der Gewindespindel 20 benutzte Werkzeug abziehen und den Verriegelungsschieber 10 nach rechts verschieben, um das Fenster 33 zu schließen und die Antriebswelle des Hauptschalters 5 freizugeben.

Die beschriebenen Einrichtungen stellen sicher, dass der Benutzer zuerst den Hauptschalter 5 ausschalten muss, wenn er den Geräteeinschub aus dem Schaltfeld entnehmen möchte. Danach kann der Verriegelungsschieber 10 betätigt und das Fenster 33 freigegeben werden, um die Gewindespindel 20 zu bedienen. Der Schieber 12 für den Hilfstrennkontaktblock 13 wird beim Ausfahren des Geräteträgers 3 über die erste Kulisse 31 und den Stift 32 ohne Zutun des Benutzers betätigt.

Um die beschriebenen Vorgänge zu verdeutlichen, zeigen die Figuren 5, 6, 7 und 8 die unterschiedlichen Stellungen. Zunächst zeigt die Figur 5 die Position des Geräteeinschubes 1 beim Einsetzen in ein angedeutetes Schaltfeldgerüst 36, das Feldschienen 37 und Abgangskontakte 38 sowie ein Gegenstück 40 für den Hilfstrennkontaktblock 13 aufweist. Die Rasthaken sind durch Anlaufen an das Schaltfeldgerüst 36 einwärts geschwenkt, was dadurch ermöglicht ist, dass infolge der Trennstellung des Geräteeinschubes 1 die Bolzen 30 (Figur 1) in Freimachungen der Rasthaken 23 eintreten können.

In der Figur 6 befindet sich der Geräteeinschub im Schaltfeld 36 und steht in der Trennstellung. Die Rasthaken sind aufgrund ihrer Federung nach außen geschwenkt, so dass die Rastnasen 27 (Figur 1) in entsprechende Ausnehmungen im Schaltfeldgerüst 36 eingreifen und die Grundplatte am Schaltfeldgerüst abgestützt ist. Auch greift die Führungszunge 17 in das Schaltfeldgerüst 36 ein.

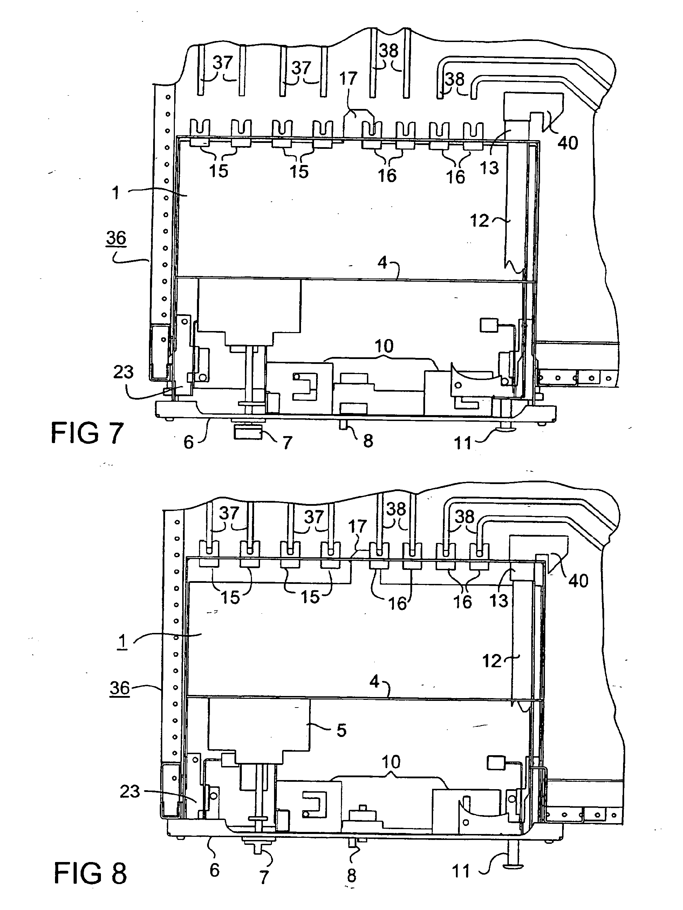

In der Teststellung gemäß der Figur 7 steht der Hilfstrennkontaktblock 13 in Eingriff mit dem ortsfesten Gegenstück 40. Die Trennkontakte 15 und 16 sind weiterhin nicht im Eingriff mit den Feldschienen 37 bzw. den Abgangskontakten 38.

Die Figur 8 zeigt abschließend die Betriebsstellung des Geräteeinschubes 1, in der alle Trennkontakte 15 und 16 sowie der Hilfstrennkontaktblock 13 geschlossen sind. Ferner steht nun die Frontblende 6 bündig zur Front des Schaltfeldgerüstes 36. Ein Hilfswerkzeug 41 zur Betätigung der Gewindespindel 20 ist in seiner Gebrauchsstellung gezeigt.

## Patentansprüche

1. Geräteeinschub (1) für ein elektrisches Schaltfeld mit folgenden Merkmalen:
- ein rahmenartiger Geräteträger (3) mit Trennkontakten(15, 16) für die Energiezuleitung zu den Geräten,
- eine Grundplatte (2) und Führungsmittel zur gegenseitigen Führung der Grundplatte (2) und des Geräteträgers (3) in Einschubrichtung,
- eine Rasteinrichtung zur lösbaren Befestigung der Grundplatte (2) im Schaltfeld und ein frontseitig am Geräteeinschub (1) zugängliches Bedienelement (26)für die Rasteinrichtung,
- eine Gewindespindel (20) sowie ein die Gewindespindel (20) aufnehmendes Mutterstück (18) zur Verschiebung des Geräteträgers (1) relativ zu der Grundplatte (2) in eine Betriebsstellung und in eine Trennstellung,
**gekennzeichnet durch** folgende weitere Merkmale:
- die Gewindespindel (20) ist zwischen den Frontseiten des Geräteträgers (3) und der Grundplatte (2) angeordnet und der relativen Verschiebung von Grundplatte (2) und Geräteträger (3) angepasst, und
- die Rasteinrichtung umfasst zwei an gegenüberliegenden Seitenkanten (21, 22) der Grundplatte (2) angeordnete Rasthaken (23).

2. Geräteeinschub nach Anspruch 1,
**dadurch gekennzeichnet, dass**
an dem Geräteträger (3) mit den an der Grundplatte (2) befindlichen Rasthaken (23) zusammenwirkende Sperrorgane (30) derart angeordnet sind, dass eine der Verrastung der Grundplatte (2) im Schaltfeld vorausgehende Schwenkung der Rasthaken (23) nur in einer der Trennstellung des Geräteeinschubes (1) entsprechenden relativen Stellung des Geräteträgers (3) zu der Grundplatte (2) erfolgen kann.

3. Geräteeinschub nach Anspruch 1 oder 2,
**dadurch gekennzeichnet, dass**
an der Rückseite des Geräteträgers (3) ein Hilfstrennkontaktblock (13) in Einschubrichtung verschiebbar angeordnet ist und dass zur Betätigung des Hilfstrennkontaktblockes (13) in Richtung eines im Schaltfeld ortsfest angeordneten Gegenstückes (40) des Hilfstrennkontaktblockes (13) ein frontseitig am Geräteträger (3) bedienbarer Schieber (12) vorgesehen ist.

4. Geräteeinschub nach Anspruch 3,
**dadurch gekennzeichnet, dass**
der Schieber (12) nahe einer Seitenwand des Geräteträgers (3) und parallel zu dieser angeordnet ist.

5. Geräteeinschub nach einem der Ansprüche 1 bis 4,
**dadurch gekennzeichnet, dass**
eine frontseitig am Geräteträger (3) angeordnete Zugangsöffnung (33) zu der Gewindespindel (20) durch einen in seine Verschlussstellung vorgespannten, von Hand bedienbaren und quer zur Einschubrichtung am Geräteträger (3) bewegbar geführten Verriegelungsschieber (10) verschließbar ist, der seinerseits in Abhängigkeit von der Schaltstellung eines auf dem Geräteträger (3) montierten Hauptschalters (5) blockierbar bzw. freigebbar ist.

6. Geräteeinschub nach Anspruch 5,
**dadurch gekennzeichnet, dass**
der Schieber (12) für den Hilfstrennkontaktblock (13) einen Kulissenstift (32) trägt, der mit einer am Verriegelungsschieber (10) angeordneten ersten Kulisse (31)zusammenwirkt, die einen in Einschubrichtung verlaufend angeordneten Kulissenabschnitt und einen von dem vorderen Ende dieses Kulissenabschnittes ausgehend und quer zur Einschubrichtung angeordneten Kulissenabschnitt aufweist, wobei der in Einschubrichtung angeordnete Kulissenabschnitt eine Betätigung des Schiebers (12) des Hilfstrenntontaktblockes (13) nur in der Sperrstellung des Verriegelungsschiebers (10) gestattet.

7. Geräteeinschub nach Anspruch 5 oder 6,
**dadurch gekennzeichnet, dass**
der Verriegelungsschieber (10) eine zweite Kulisse (34) mit einem in Einschubrichtung verlaufend angeordneten Kulissenabschnitt sowie von den Enden dieses Kulissenabschnittes ausgehende und quer zur Einschubrichtung verlaufend angeordnete Kulissenabschnitte aufweist, und dass an der Grundplatte (2) ein mit der zweiten Kulisse (34) zusammenwirkender Kulissenstift (35)angeordnet ist, wobei die Länge des in Einschubrichtung verlaufenden Kulissenabschnittes dem Weg des Geräteträgers (3) zwischen der Trennstellung und der Betriebsstellung entspricht und aufgrund dieser Anordnung der Hauptschalter (5) außerhalb der Endstellungen des Geräteträgers (3) gegen Einschalten gesperrt ist.

8. Geräteeinschub nach einem der vorangehenden Ansprüche,
**dadurch gekennzeichnet, dass**
die Grundplatte (2) mit einer sich in Einschubrichtung erstreckenden Führungszunge (17) versehen ist und im Schaltfeld eine Aufnahmeöffnung für die Führungszunge angeordnet ist.

9. Geräteeinschub nach einem der vorangehenden Ansprüche,
**dadurch gekennzeichnet, dass**
eine mit Bedien- und/oder Anzeigeelementen bestückte Frontblende (6) und mit einem Fenster (33) als Zugangsöffnung zur Gewindespindel (20) am Geräteträger (3) lösbar angebracht ist.

## Claims

1. Withdrawable unit (1) for an electrical switch panel having the following features:
- a frame-like mounting rack (3) with isolating contacts (15, 16) for the power supply to the appliances,
- a base plate (2) and guide means for mutual guidance of the base plate (2) and of the mounting rack (3) in the insertion direction,
- a latching device for detachable mounting of the base plate (2) in the switch panel, and a control element (26), which is accessible from the front of the withdrawable unit (1), for the latching device,
- a threaded spindle (20) as well as a nut piece (18), which holds the threaded spindle (20), for movement of the mounting rack (3) relative to the base plate (2) to an operating position and to a disconnected position,
**characterized by**
the following further features:
- the threaded spindle (20) is arranged between the front faces of the mounting rack (3) and the base plate (2) and is matched to the relative movement of the base plate (2) and mounting rack (3), and
- the latching device has two latching hooks (23) which are arranged on opposite side edges (21, 22) of the base plate (2).

2. Withdrawable unit according to Claim 1, **characterized in that** blocking members (30) which interact with the latching hooks (23) which are located on the base plate (2) are arranged on the mounting rack (3) in such a way that pivoting of the latching hooks (23), which precedes the latching of the base plate (2) in the switch panel, can take place only when the mounting rack (3) is in a position relative to the base plate (2) which corresponds to the withdrawable unit (1) being in the disconnected position.

3. Withdrawable unit according to Claim 1 or 2, **characterized in that** an auxiliary isolating contact block (13) is arranged on the rear face of the mounting rack (3) such that it can be moved in the insertion direction, and **in that** a slide (12), which can be operated from the front of the mounting rack (3), is provided for operation of the auxiliary isolating contact block (13) in the direction of a mating piece (40), which is arranged in a fixed position in the switch panel, of the auxiliary isolating contact block (13).

4. Withdrawable unit according to Claim 3, **characterized in that** the slide (12) is arranged close to one side wall of the mounting rack (3), and parallel to it.

5. Withdrawable unit according to one of Claims 1 to 4, **characterized in that** an access opening (33), which is arranged at the front of the mounting rack (3), for the threaded spindle (20) can be closed by means of a locking slide (10), which is prestressed in its locking position, can be operated by hand, is guided such that it can be moved transversely with respect to the insertion direction on the mounting rack (3) and can itself be blocked or released as a function of the switch position of a main switch (5) which is mounted on the mounting rack (3).

6. Withdrawable unit according to Claim 5, **characterized in that** the slide (12) for the auxiliary isolating contact block (13) is fitted with a slotted-link pin (32) which interacts with a first slotted link (31) which is arranged on the locking slide (10) and has a slotted-link section arranged such that it runs in the insertion direction and a slotted-link section arranged transversely with respect to the insertion direction and originating from the front end of the first slotted-link section, with the slotted-link section which is arranged in the insertion direction allowing the slide (12) of the auxiliary isolating contact block (13) to be operated only when the locking slide (10) is in the blocking position.

7. Withdrawable unit according to Claim 5 or 6, **characterized in that** the locking slide (10) has a second slotted link (34) with a slotted-link section arranged such that it runs in the insertion direction as well as slotted-link sections arranged such that they run transversely with respect to the insertion direction and originating from the ends of this slotted-link section, and **in that** a slotted-link pin (35) which interacts with the second slotted link (34) is arranged on the base plate (2), with the length of the slotted-link section which runs in the insertion direction corresponding to the movement path of the mounting rack (3) between the disconnected position and the operating position, and the main switch being blocked against being switched on (5) away from the limit positions of the mounting rack (3) by this arrangement.

8. Withdrawable unit according to one of the preceding claims, **characterized in that** the base plate (2) is provided with a guide tongue (17) which extends in the insertion direction, and a retaining opening for the guide tongue is arranged in the switch panel.

9. Withdrawable unit according to one of the preceding claims, **characterized in that** a front panel (6), which is fitted with control and/or display elements, is detachably fitted to the mounting rack (3), with a window (33) as an access opening to the threaded spindle (20).

## Revendications

1. Tiroir d'appareillage (1) pour un panneau électrique, ayant les caractéristiques suivantes :
- un support d'appareillage (3) en forme de cadre et ayant des contacts de sectionnement (15, 16) pour apporter de l'énergie aux appareils,
- une platine de base (2) et des moyens de guidage pour le guidage mutuel de la platine de base (2) et du support d'appareillage (3) dans le sens de l'insertion,
- un dispositif d'encliquetage pour la fixation amovible de la platine de base (2) dans le panneau et un élément de commande (26), accessible en face avant du tiroir d'appareillage (1), du dispositif d'encliquetage,
- une broche filetée (20) ainsi qu'un pièce écrou (18) recevant la broche filetée (20) pour le coulissement du tiroir d'appareillage (1) par rapport à la platine de base (2), dans une position de service et une position de sectionnement,
**caractérisé par** d'autres caractéristiques suivantes :
- la broche filetée (20) est disposée entre les faces avant du support d'appareillage (3) et de la platine de base (2) et est adaptée au coulissement relatif de la platine de base (2) et du support d'appareillage (3), et
- le dispositif d'encliquetage comprend deux crochets d'encliquetage (23) disposés sur les bords latéraux (21, 22) opposés de la platine de base (2).

2. Tiroir d'appareillage selon la revendication 1,
**caractérisé en ce que** des organes de blocage (30), coopérant avec les crochets d'encliquetage (23) se trouvant sur la platine de base (2), sont disposés sur le support d'appareillage (3) de telle sorte qu'un pivotement des crochets d'encliquetage (23) précédant l'encliquetage de la platine de base (2) dans le panneau ne puisse se produire que dans une position relative du support d'appareillage (3) par rapport à la platine de base (2), correspondant à l'une des positions de sectionnement du tiroir d'appareillage (1).

3. Tiroir d'appareillage selon la revendication 1 ou 2,
**caractérisé en ce qu'**est disposé sur la face arrière du support d'appareillage (3), un bloc de contact de sectionnement auxiliaire (13) coulissant dans le sens de l'insertion et **en ce qu'**un coulisseau (12) manoeuvrable en face avant du support d'appareillage (3) est prévu pour l'actionnement du bloc de contact de sectionnement auxiliaire (13), dans la direction d'une contre-pièce (40) du bloc de contact de sectionnement auxiliaire (13), disposée de manière fixe dans le panneau.

4. Tiroir d'appareillage selon la revendication 3,
**caractérisé en ce que** le coulisseau (12) est voisin d'une paroi latérale du support d'appareillage (3) et est disposé parallèlement à celle-ci.

5. Tiroir d'appareillage selon la revendication 1 à 4,
**caractérisé en ce qu'**une ouverture d'accès (33) à la broche filetée (20), disposée en face avant sur le support d'appareillage (3), est verrouillable par un coulisseau de verrouillage (10) précontraint dans sa position de fermeture, actionnable manuellement et guidé de manière mobile sur le support d'appareillage (3) transversalement au sens d'insertion, ledit coulisseau lui-même pouvant être bloqué ou libéré en fonction de la position de commutation d'un interrupteur général (5) monté sur le support d'appareillage (3).

6. Tiroir d'appareillage selon la revendication 5,
**caractérisé en ce que** le coulisseau (12) pour le bloc de contact de sectionnement auxiliaire (13) supporte une tige de coulisse (32) qui coopère avec une première coulisse (31) qui est disposée sur le coulisseau de verrouillage (10) et qui comprend une partie de coulisse s'étendant dans le sens d'insertion et une partie de coulisse partant de l'extrémité avant de cette partie de coulisse et disposée transversalement au sens d'insertion, la partie de coulisse montée dans le sens d'insertion autorisant un actionnement du coulisseau (12) du bloc de contact de sectionnement auxiliaire (13) uniquement dans la position de blocage du coulisseau de verrouillage (10).

7. Tiroir d'appareillage selon la revendication 5 ou 6,
**caractérisé en ce que** le coulisseau de verrouillage (10) comporte une seconde coulisse (34) ayant une partie de coulisse disposée dans le sens d'insertion ainsi que des parties de coulisse partant des extrémités de cette partie de coulisse et disposées transversalement au sens d'insertion et **en ce que** sur la platine de base (2) est disposée une tige de coulisse (35) coopérant avec la seconde coulisse (34), la longueur de la partie de coulisse s'étendant dans le sens d'insertion correspondant à la course du support d'appareillage (3) entre la position de sectionnement et la position de service et, en raison de cet agencement, l'interrupteur général (5) étant bloqué contre la mise en marche, à l'extérieur des positions finales du support d'appareillage (3).

8. Tiroir d'appareillage selon l'une quelconque des précédentes revendications,
**caractérisé en ce que** la platine de base (2) est équipée d'une languette de guidage (17) s'étendant dans le sens d'insertion et **en ce qu'**une ouverture de réception de la languette de guidage est disposée dans le panneau.

9. Tiroir d'appareillage selon l'une quelconque des précédentes revendications,
**caractérisé en ce qu'**un écran frontal (6), doté d'éléments de commande et/ou de visualisation ainsi que d'une fenêtre (33) servant d'ouverture d'accès à la broche filetée (20), est monté de manière amovible sur le support d' appareillage (3).
